# EUROPÄISCHE PATENTSCHRIFT

(11) **EP 3 533 714 B1**
(45) Veröffentlichungstag und Bekanntmachung des Hinweises auf die Patenterteilung: **11.08.2021**
(21) Anmeldenummer: 18159203.1
(22) Anmeldetag: 28.02.2018
(51) Int. Cl.: B64D 45/00

(54) **GEHÄUSE FÜR EINEN ABWERFBAREN FLUGDATENSCHREIBER**
HOUSING FOR A RELEASABLE FLIGHT DATA RECORDER
BOÎTIER POUR UN ENREGISTREUR DE DONNÉES DE VOL LARGABLE

(43) Veröffentlichungstag der Anmeldung: 04.09.2019
(73) Patentinhaber: HENSOLDT Sensors GmbH, 82024 Taufkirchen (DE)
(72) Erfinder: Stehle, Nikolaus, 88048 Friedrichshafen (DE); Biell, Mark, 88048 Friedrichshafen (DE); Würker, Sven, 78357 Mühlingen (DE); Feierabend, Stefan, 88048 Friedrichshafen (DE)
(74) Vertreter: LifeTech IP Spies & Behrndt Patentanwälte PartG mbB

(56) Entgegenhaltungen:
- CN-U- 201 703 564
- DE-B3-102015 014 602

## Beschreibung

Die vorliegende Erfindung bezieht sich auf ein Gehäuse für einen abwerfbaren Flugdatenschreiber und ein Verfahren zu dessen Herstellung und insbesondere auf einen Flugdatenschreiber mit einer integrierten verformbaren Außenhülle, um mögliche Einschläge auf Flugzeugstrukturen beim Abwerfen zu minimieren und um interne Komponenten des Flugdatenschreibers zu schützen.

### Hintergrund

In kommerziellen und militärisch genutzten Großraumflugzeugen und anderen Luftfahrzeugen kommen Flugdatenschreiber zum Einsatz, die im Einsatzfall beispielsweise über eine Sprengladung von dem Flugzeug abgesprengt werden. Je nach der Positionierung des Flugdatenschreibers besteht unter gewissen Umständen eine hohe Wahrscheinlichkeit, dass beim Abwerfen der Flugdatenschreiber einen Teil des Flugzeuges (z.B. ein Ruder) trifft und dieses beschädigt. Wenn dies beispielsweise während des Startes oder der Landung oder bei einer anderen kritischen Situation des Flugzeuges geschieht, können auch kleinere Beschädigungen an Flugzeugteilen schwerwiegende Folgen haben.

DE 10 2015 014 602 B3 offenbart einen bekannten Flugschreibervorrichtung zur Verbesserung der Auffindbarkeit und zur erleichterten Bergung des Flugschreibers. Außerdem offenbart CN 201 703 564 U einen bekannte Schutz für einen Flugdatenschreiber, der ebenfalls eine äußere Schutzhülle in Form eines Airbags aufweist, um den Flugdatenschreiber zu schützen.

Die bisher genutzten Flugdatenschreiber können dieses Risiko nur unzureichend vermeiden. Daher besteht ein Bedarf nach einem Flugdatenschreiber oder nach neuen Möglichkeiten zu deren Unterbringung in kommerziellen und militärisch genutzten Luftfahrzeugen, die derartige Risiken vermeiden können.

### Zusammenfassung

Zumindest ein Teil der oben genannten Probleme wird durch ein Gehäuse für einen abwerfbaren Flugdatenschreiber nach Anspruch 1 und ein Verfahren zu dessen Herstellung nach Anspruch 7 gelöst. Die abhängigen Ansprüche beziehen sich auf weitere vorteilhafte Ausgestaltungen der Gegenstände der unabhängigen Ansprüche.

Die vorliegende Erfindung bezieht sich auf ein Gehäuse gemäß dem unabhängigen Anspruch 1 für einen abwerfbaren Flugdatenschreiber eines Luftfahrzeuges. Das Gehäuse umfasst ein Innengehäuse mit zumindest einer Innenkante und einen deformierbaren Außenbereich mit zumindest einer abgerundeten Außenkante, wobei die abgerundete Außenkante des Außenbereichs einen größeren Krümmungsradius als die Innenkante des Innengehäuses aufweist. Der Außenbereich weist außerdem ein Stoßdämpfungsmaterial auf und ist ausgebildet, um im Falle eines Abwerfens des Flugdatenschreibers eine Beschädigung des Luftfahrzeuges zu vermeiden, die die Luftsicherheit einschränken würde.

Die Innenkante und die Außenkante bilden z.B. äußere umlaufende Begrenzung für das Innengehäuse bzw. den Außenbereich. Der Bereich der Außenkante (und analog der Bereich der Innenkante) kann beispielsweise dadurch definiert werden, dass dort eine (positiv) gekrümmte Oberfläche (d.h. von außen konvex) vorliegt, die eine beispielhafte Oberseite des Flugdatenschreibers mit einer Seitenfläche verbindet. Es versteht sich, dass entlang einer gekrümmten Oberfläche, an jedem Punkt im allgemeinen ein anderer Krümmungsradius existieren wird. Der Krümmungsradius gemäß der vorliegenden Erfindung kann beispielsweise als ein mittlerer Krümmungsradius in dem Kantenbereich definiert werden. Ebenso ist es möglich, dass der Krümmungsradius in dem Kantenbereich als der Minimalwert entlang der gekrümmten Fläche definiert werden kann. Der Krümmungsradius ist entlang einer flachen Seitenfläche beispielsweise unendlich, während er entlang einer scharfen Kante einen Wert von nahe Null besitzt. Somit ist mit zunehmender Verkleinerung des Krümmungsradius die Kante zunehmend schärfer ausgebildet und das Minimum des Krümmungsradius definiert also jene Bereiche, in denen die Kante am stärksten gekrümmt ist. Ausführungsbeispiele der vorliegenden Erfindung sollen solche scharfen Kanten vermeiden.

Optional umfasst der Außenbereich ein Außengehäuse mit abgerundeten Kanten und Ecken, sodass zwischen dem Außengehäuse und dem Innengehäuse ein Hohlraum gebildet ist. Dieser Hohlraum kann mit einem ein Füllstoff (z.B. ein Schaumstoff) gefüllt sein. Es können aber auch verschiedene Luftpolster als Dämpfung gebildet sein.

Das Gehäuse umfasst eine mittige oder mehrere Durchgangspassage(n) (oder eine Ausnehmung oder eine Öffnung), um eine Einpunkt- oder Mehrpunktaufhängung zu ermöglichen. Beispielsweise umfasst das Luftfahrzeug Befestigungsmittel zur Befestigung des Flugdatenschreibers und die Durchgangspassage kann beispielsweise einen Haltering aufweisen, der beim Befestigen mit den Befestigungsmittel der Luftfahrzeuges in Eingriff gelangt. Die Befestigungsmittel umfassen beispielsweise einen Bolzen, insbesondere mit einem Kugelsperrbolzen, und der Haltering kann über eine Öffnung den beispielhaften Kugelsperrbolzen aufnehmen, sodass das Gehäuse mit Kugeln entlang des Halteringes gehalten wird. Zum Lösen der Verbindung kann ein bewegliches Teil vorgesehen sein, das eine Bewegung der Kugeln ermöglicht, um so den Haltering frei zu geben. Der Kugelsperrbolzen kann dann aus dem Haltering herausgezogen werden, so dass das Gehäuse nicht mehr gehalten wird.

Optional ist der Flugdatenschreiber in einer durch eine Abdeckung verschließbaren Kammer des Luftfahrzeuges platzierbar. Das Innengehäuse kann ein oder mehrere Befestigungselemente aufweisen, um die Abdeckung an dem Gehäuse zu befestigen. Außerdem kann der Außenbereich eine oder mehre Öffnungen aufweisen, um einen Zugang zu den Befestigungselementen zu erreichen. Die Befestigungselemente können beispielsweise Bohrungen mit einem Innengewinde sein, an die die Abdeckung angeschraubt werden kann. Somit wird die Abdeckung nur durch das Gehäuse gehalten und beim Einsatz zum Beispiel zusammen mit dem Gehäuse abgesprengt. Optional umfasst die Abdeckung eine Außenlackierung des Luftfahrzeuges, da sie nach dem Befestigen an dem Gehäuse Teil der Außenoberfläche des Luftfahrzeuges wird.

Optional umfasst das Innengehäuse ein Material, welches ausreichend stabil ist, um Daten aus dem Flugdatenschreiber nach einem Absturz des Luftfahrzeuges auslesen zu können, während der Außenbereich zumindest ein oder mehrere Luftpolster und/oder ein Schaumstoff und/oder ein anderes Kunststoffmaterial aufweist.

Insbesondere kann das Außengehäuse einen gehärteten Schaumstoff oder ein weiches Kunststoffmaterial aufweisen, sodass das Außengehäuse zusammen mit dem Außenbereich leichter deformierbar ist als das Innengehäuse, welches beispielsweise ein Metall umfassen kann. Es ist jedoch ebenfalls möglich, dass das Außengehäuse und das Innengehäuse ein gleiches Material aufweisen (z.B. ein Faserverbundstoff oder ein Polymer oder auch ein Metall), das Außengehäuse jedoch dünner ausgebildet ist als das Innengehäuse und daher leichter deformierbar ist.

Die vorliegende Erfindung bezieht sich auch auf einen Flugdatenschreiber gemäß Anspruch 6 für ein Luftfahrzeug, insbesondere für ein Flugzeug, der mittels einer Sprengladung von dem Luftfahrzeug abwerfbar ist und ein zuvor definiertes Gehäuse aufweist.

Die vorliegende Erfindung bezieht sich auch auf ein Verfahren gemäß dem unabhängigen Anspruch 7 zur Herstellung des oben definierten Gehäuses für einen abwerfbaren Flugdatenschreiber. Das Verfahren umfasst die Schritte: Bereitstellen eines Innengehäuses mit einer Innenkante; und Ausbilden eines Außenbereiches durch ein Aufbringen eines Stoßdämpfungsmaterials auf das Innengehäuse. Dieser Schritt wird derart ausgeführt, dass der Außenbereich zumindest eine Außenkante aufweist, die einen größeren Krümmungsradius hat als die Innenkante des Innengehäuses. Das Stoßdämpfungsmaterial ist ausgebildet, um im Falle eines Abwerfens des Flugdatenschreibers von dem Luftfahrzeug eine Beschädigung des Luftfahrzeuges zu vermeiden, die die Luftsicherheit einschränken würde.

Optional umfasst das Aufbringen des Stoßdämpfungsmaterials Folgendes: Bereitstellen eines Außengehäuses; und Einbringen eines Füllstoffes (wie z.B. ein Schaumstoffmaterial) in einen Hohlraum zwischen dem Innengehäuse und dem Außengehäuse.

### Kurzbeschreibung der Figuren

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt ein Gehäuse für einen abwerfbaren Flugdatenschreiber gemäß einem Ausführungsbeispiel der vorliegenden Erfindung.
- Fig. 2: zeigt eine Querschnittsansicht durch das Gehäuse des abwerfbaren Flugdatenschreibers.
- Fig. 3: zeigt ein schematisches Flussdiagramm für ein Verfahren zur Herstellung eines Gehäuses für einen abwerfbaren Flugdatenschreiber

### Detaillierte Beschreibung

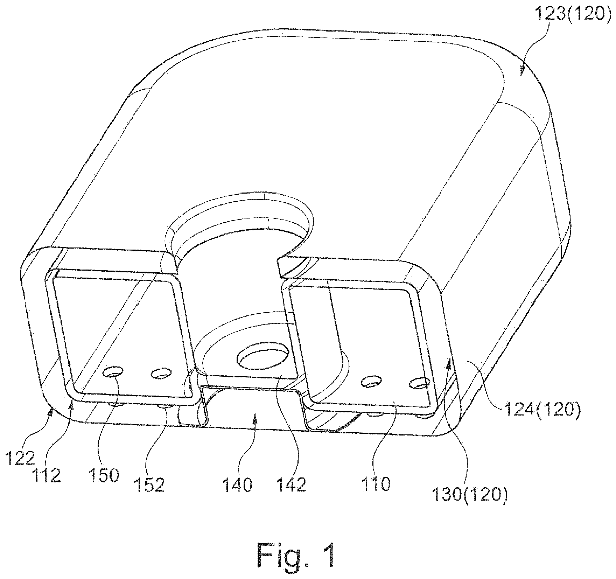

**Fig. 1** zeigt einen Querschnitt durch ein Gehäuse für einen abwerfbaren Flugdatenschreiber eines Flugzeuges (oder eines allgemeinen Luftfahrzeuges) gemäß einem Ausführungsbeispiel der vorliegenden Erfindung, wobei die gezeigte Darstellung beispielhaft eine Perspektivansicht von der Seite ist, die nach dem Einbau ins Flugzeuginnere zeigt. Das Gehäuse umfasst: ein Innengehäuse 110 mit zumindest einer Innenkante 112 und einen deformierbaren Außenbereich 120 mit zumindest einer abgerundeten Außenkante 122. Die Außenkante 122 des Außenbereichs 120 weist einen größeren Krümmungsradius auf als die Innenkante 112 des Innengehäuses 110. Der Außenbereich 120 weist ein Stoßdämpfungsmaterial auf und ist ausgebildet, um im Falle eines Abwerfens des Flugdatenschreibers von dem Flugzeug eine Beschädigung des Flugzeuges zu vermeiden.

Bei dem Gehäuse aus der Fig. 1 wird der Außenbereich 120 durch ein Außengehäuse 124 gebildet, das von dem Innengehäuse 110 beabstandet ist, um zwischen dem Innengehäuse 110 und dem Außengehäuse 124 einen Hohlraum 130 zu bilden, in dem ein Schaumstoff oder Kunststoff oder auch Luftpolster ausgebildet sein können, die eine zuverlässige Dämpfung bereitstellen. Außerdem zeigt das Ausführungsbeispiel der Fig. 1 in einem zentralen Bereich eine Durchgangspassage 140, die eine Einpunktaufhängung, beispielsweise über ein Haltebolzen, ermöglicht. Dazu weist die Durchgangspassage 140 einen Haltering 142 auf, der beispielsweise fest mit dem Innengehäuse 110 verbunden ist. Durch die Ringöffnung des Halteringes 142 kann ein Haltebolzen hindurchgeführt werden, um das Gehäuse an dem Flugzeug zu halten.

Das Ausführungsbeispiel der Fig. 1 zeigt weiter, dass das Innengehäuses 110 eine größere Dicke aufweist als das Außengehäuse 124. Beispielsweise ist es möglich, dass sowohl das Außengehäuse 124 als auch das Innengehäuse 110 ein gleiches Material aufweist (z.B. faserverstärktes Kunststoffmaterial oder auch ein Metall), wobei das Innengehäuse 110 aufgrund der höheren Dicke (z.B. mehr Lagen eines Faserverbundmaterials) eine gewünschte Festigkeit erlangt. Die Materialien für das Innengehäuse 110 und/oder das Außengehäuse 124 können ebenfalls feuerfest sein, um den Flugdatenschreiber vor Feuer zu schützen.

Die Fig. 1 zeigt weiter Befestigungselemente 150, die in dem Innengehäuse 110 ausgebildet sind. Die Befestigungselemente 150 umfassen zum Beispiel Bohrungen, die in dem Innengehäuse 110 ausgebildet sind und beispielsweise für Schraubverbindungen genutzt werden können. Die Befestigungselemente 150 sind über Öffnungen 152 in dem Außenbereich 120 bzw. dem Außengehäuse 124 zugänglich. Dadurch wird es möglich, dass beispielsweise eine Abdeckung (in der Fig.1 nicht gezeigt) durch das Innengehäuse 110 gehalten werden kann. Die Abdeckung kann beispielsweise ein Außenbereich des Flugzeuges sein, der nach einer Befestigung des Gehäuses in einer Kammer des Flugzeuges diese Kammer verschließt. Dazu kann die Abdeckung beispielsweise eine Außenlackierung des beispielhaften Flugzeuges aufweisen.

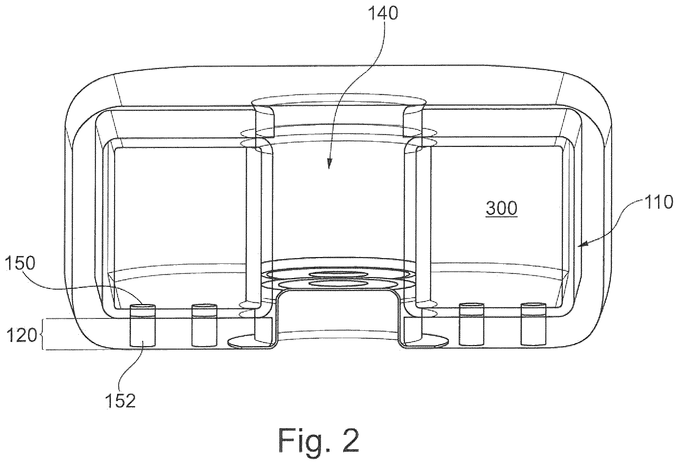

**Fig. 2** zeigt eine Querschnittsansicht durch das Gehäuse des Flugdatenschreibers. In der Querschnittsansicht ist der Innenbereich 300 zu sehen, der sich um die Durchgangspassage 140 herum erstreckt und durch das Innengehäuse 110 nach außen begrenzt wird. In dem Innenbereich 300 kann der Flugdatenschreiber angeordnet werden. Außerdem zeigt die Fig. 2, dass die Öffnungen 152 sich durch den Außenbereich 120 hindurch erstrecken, um die Befestigungselemente 150 zugänglich zu machen.

Die Befestigungselemente 150 und die Durchgangspassagen 140 sind in dem gezeigten Ausführungsbeispiel lediglich beispielhaft als Öffnungen dargestellt. Bei weiteren Ausführungsbeispielen ist es ebenfalls möglich, dass andere Befestigungsstrukturen zum Einsatz kommen, um einerseits das Gehäuse mit dem Flugzeug fest zu verbinden (z.B. in einer Kammer entlang der Außenfläche des Flugzeuges) bzw. eine äußere Abdeckung an dem Gehäuse zu fixieren. Beispielsweise können dazu ebenfalls Nietverbindungen oder Einrastverbindungen zur Anwendung kommen, solange diese alternativen Befestigungsstrukturen eine zuverlässige Befestigung sowohl des Flugdatenschreibers als auch der beispielhaften Abdeckung ermöglichen.

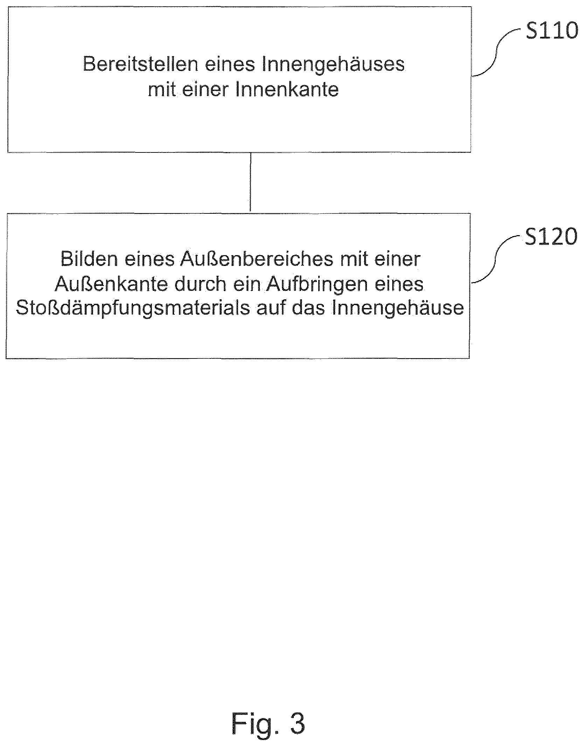

**Fig. 3** zeigt ein schematisches Flussdiagramm für ein Verfahren zur Herstellung eines Gehäuses für einen abwerfbaren Flugdatenschreiber. Das Verfahren umfasst die folgenden Schritte:
- Bereitstellen S110 eines Innengehäuses 110 mit einer Innenkante 112; und
- Bilden S120 eines Außenbereiches 120 mit einer Außenkante 122 durch ein Aufbringen eines Stoßdämpfungsmaterials auf das Innengehäuse 110,
wobei die Außenkante 122 einen größeren Krümmungsradius aufweist als die Innenkante 112 des Innengehäuses 110 und das Stoßdämpfungsmaterial ausgebildet ist, um im Falle eines Abwerfens des Flugdatenschreibers von dem Luftfahrzeug eine Beschädigung des Luftfahrzeuges zu vermeiden.

Es versteht sich, dass die gezeigte kastenförmige Ausgestaltungen des Flugdatenschreibers lediglich beispielhaft zu verstehen ist. Es ist ebenfalls möglich, dass der Flugdatenschreiber eine runde oder ovale oder jede andere Form aufweisen kann, solange die äußere Form derart ist, dass keine scharfen Kanten oder andere Strukturen vorhanden sind, die eine unerwünschte Beschädigung des Flugzeuges beim Einsatz zur Folge haben könnten. Eine unerwünschte Beschädigung umfasst insbesondere solche Beschädigungen, die die Flugsicherheit weiter einschränken würde - nicht aber z.B. Lackschäden oder leichte Deformationen der Flugzeugaußenfläche.

Somit werden zumindest ein Teil der eingangs erwähnten Problem durch Ausführungsbeispiele der vorliegenden Erfindung dadurch gelöst, dass ein Gehäuse eines Flugdatenschreibers mit einer zweiten, äußeren Hülle 124 versehen wird, die sich leicht deformieren lässt und beim Aufprall auf ein Flugzeugteil dort keine oder nur geringe Schäden verursacht. Wie dargelegt, kann dazu das Gehäuse ein Innengehäuse 110 und ein Außengehäuse 124 aufweisen, zwischen denen ein Schaum eingebracht wird, der die zusätzliche Energie beim Aufprall aufnehmen kann. Insbesondere kann das Außengehäuse 124 ein Material umfassen, welches sich leicht deformieren lässt, so dass das Außengehäuse 124 zusammen mit dem Füllstoff ein Stoßdämpfungsmaterial bildet.

Außerdem wird gemäß den vorliegenden Ausführungsbeispielen das Gehäuse des Flugdatenschreibers derart geformt, dass keine scharfen Kanten vorhanden sind bzw. nur an solchen Positionen vorhanden sind, die bei einem Abwerfen des Flugdatenschreibers nicht in Kontakt mit einem weiteren Flugzeugteil geraten können. Aufgrund der fehlenden scharfen Kanten entsteht bei dem möglichen Aufprall eine möglichst große Fläche, auf die sich die Einschlagenergie verteilt.

Das Material und die Abrundungen für den Außenbereich 120 werden beispielsweise so gewählt, dass die mögliche Einschlagenergie (beim Abwerfen) beispielsweise auf ein Niveau eines Vogelschlages gesenkt wird und/oder dass bei einem Einschlag die internen Komponenten (z.B. Speicherkomponenten oder eine Elektronik) zuverlässig geschützt sind. Da alle äußeren Flugzeugteile Tests hinsichtlich vom Vogelschlag zu absolvieren haben, kann mit einem solchen Vorgehen gewährleistet werden, dass in kritischen Phasen ein Abwerfen des Flugdatenschreibers keine zusätzliche Gefahr hinsichtlich weiterer Flugzeugteile besteht.

Die in der Beschreibung und den Figuren offenbarten Merkmale können, soweit sie in den Geltungsbereich der beigefügten Ansprüche fallen, sowohl einzeln als auch in beliebiger Kombination für die Verwirklichung der Erfindung wesentlich sein.

### Bezugszeichenliste

- 110: Innengehäuse
- 112: Innenkante
- 120: deformierbarer Außenbereich
- 122: abgerundeten Außenkante
- 123: abgerundete Ecken
- 124: Außengehäuse
- 140: Durchgangspassage
- 142: Haltering
- 150: Befestigungselemente
- 152: Öffnungen
- 300: Innenraum

## Patentansprüche

1. Gehäuse für einen abwerfbaren Flugdatenschreiber eines Luftfahrzeuges mit:
einem Innengehäuse (110) mit zumindest einer Innenkante (112);
einem deformierbaren Außenbereich (120) mit zumindest einer abgerundeten Außenkante (122);
wobei die Außenkante (122) des Außenbereichs (120) einen größeren Krümmungsradius aufweist als die Innenkante (112) des Innengehäuses (110),
und wobei der Außenbereich (120) ein Stoßdämpfungsmaterial aufweist, um im Falle eines Abwerfens des Flugdatenschreibers von dem Luftfahrzeug eine Beschädigung des Luftfahrzeuges zu vermeiden, die die Luftsicherheit einschränken würde,
**dadurch gekennzeichnet, dass** das Gehäuse eine mittige Durchgangspassage (140) aufweist, um eine Einpunktaufhängung zur Befestigung des Flugdatenschreibers an dem Luftfahrzeug zu ermöglichen.

2. Gehäuse nach Anspruch 1, wobei der Außenbereich (120) Folgendes umfasst:
ein Außengehäuse (124) mit abgerundeten Kanten (122) und Ecken (123); und
einen Füllstoff (130), der zwischen dem Innengehäuse (110) und dem Außengehäuse (124) ausgebildet ist.

3. Gehäuse nach einem der vorhergehenden Ansprüche, wobei das Luftfahrzeug Befestigungsmittel, insbesondere einen Kugelsperrbolzen, zur Befestigung des Gehäuses aufweist und das Gehäuse einen Haltering (142) in der Durchgangspassage (140) aufweist, um einen Eingriff der Befestigungsmittel zu ermöglichen.

4. Gehäuse nach einem der vorhergehenden Ansprüche, wobei der Flugdatenschreiber in einer durch eine Abdeckung verschließbaren Kammer des Luftfahrzeuges platzierbar ist, und
wobei das Innengehäuse (110) ein oder mehrere Befestigungselemente (150) aufweist, um die Abdeckung an dem Gehäuse zu befestigen und der Außenbereich (120) eine oder mehre Öffnungen (152) aufweist, um einen Zugang zu den Befestigungselementen (150) zu erreichen.

5. Gehäuse nach einem der vorhergehenden Ansprüche, wobei das Innengehäuse (110) ein Material aufweist, welches ausreichend stabil ist, um Daten aus dem Flugdatenschreiber nach einem Absturz des Luftfahrzeuges auslesen zu können und der Außenbereich (120) zumindest ein Luftpolster und/oder ein Schaumstoff und/oder einen anderen Kunststoff aufweist.

6. Flugdatenschreiber für ein Luftfahrzeug, insbesondere für ein Flugzeug, der mittels einer Sprengladung von dem Luftfahrzeug abwerfbar ist und ein Gehäuse nach einem der Ansprüche 1 bis 5 aufweist.

7. Verfahren zur Herstellung eines Gehäuses für einen abwerfbaren Flugdatenschreiber eines Luftfahrtzeuges mit folgenden Schritten:
Bereitstellen (S110) eines Innengehäuses (110) mit einer Innenkante (112); und
Bilden (S120) eines Außenbereiches (120) mit einer Außenkante (122) durch ein Aufbringen eines Stoßdämpfungsmaterials auf das Innengehäuse (110),
wobei die Außenkante (122) einen größeren Krümmungsradius aufweist als die Innenkante (112) des Innengehäuses (110) und das Stoßdämpfungsmaterial ausgebildet ist, um im Falle eines Abwerfens des Flugdatenschreibers von dem Luftfahrzeug eine Beschädigung des Luftfahrzeuges zu vermeiden, die die Luftsicherheit einschränken würde,
**dadurch gekennzeichnet, dass** das Gehäuse eine mittige Durchgangspassage (140) aufweist, um eine Einpunktaufhängung zur Befestigung des Flugdatenschreibers an dem Luftfahrzeug zu ermöglichen.

8. Verfahren nach Anspruch 7, wobei das Aufbringen (S120) des Stoßdämpfungsmaterials Folgendes umfasst:
Bereitstellen eines Außengehäuses (124), sodass ein Hohlraum (130) zwischen dem Innengehäuse (110) und dem Außengehäuse (124) entsteht; und
Einbringen (S120) eines Füllstoffes, insbesondere eines Schaumstoffes, in den Hohlraum (130).

## Claims

1. Housing for a jettisonable flight data recorder of an aircraft, comprising:
an inner housing (110) with at least one inner edge (112); and
a deformable outer region (120) with at least one rounded outer edge (122);
the outer edge (122) of the outer region (120) having a larger radius of curvature than the inner edge (112) of the inner housing (110),
and the outer region (120) having a shock-absorbing material in order to, in the event that the flight data recorder is jettisoned from the aircraft, prevent damage to the aircraft that would reduce aviation safety,
**characterized in that** the housing has a central through-passage (140) so as to allow a single point mounting for fastening the flight data recorder to the aircraft.

2. Housing according to claim 1, wherein the outer region (120) comprises the following:
an outer housing (124) with rounded edges (122) and corners (123); and
a filler (130) between the inner housing (110) and the outer housing (124).

3. Housing according to either of the preceding claims, wherein the aircraft has fastening means, in particular a quick-release pin, for fastening the housing, and the housing has a retaining ring (142) in the through-passage (140) so as to allow engagement of the fastening means.

4. Housing according to any of the preceding claims, wherein the flight data recorder can be placed in a chamber of the aircraft that can be closed by a cover, and
wherein the inner housing (110) has one or more fastening elements (150) for fastening the cover to the housing, and the outer region (120) has one or more openings (152) for providing access to the fastening elements (150).

5. Housing according to any of the preceding claims, wherein the inner housing (110) comprises a material which is sufficiently stable to be able to read out data from the flight data recorder after the aircraft has crashed, and the outer region (120) has at least one air cushion and/or a foam and/or another plastics material.

6. Flight data recorder for an aircraft, in particular for an airplane, which flight data recorder can be jettisoned from the aircraft by means of an explosive charge and which has a housing according to any of claims 1 to 5.

7. Method for manufacturing a housing for a jettisonable flight data recorder of an aircraft, comprising the following steps:
providing (S110) an inner housing (110) with an inner edge (112); and
forming (S120) an outer region (120) with an outer edge (122) by applying a shock-absorbing material to the inner housing (110),
the outer edge (122) having a greater radius of curvature than the inner edge (112) of the inner housing (110) and the shock-absorbing material being designed in order to, in the event that the flight data recorder is jettisoned from the aircraft, prevent damage to the aircraft that would reduce aviation safety,
**characterized in that** the housing has a central through-passage (140) so as to allow a single point mounting for fastening the flight data recorder to the aircraft.

8. Method according to claim 7, wherein applying (S120) the shock-absorbing material comprises the following:
providing an outer housing (124) so that a cavity (130) is created between the inner housing (110) and the outer housing (124); and
introducing (S120) a filler, in particular a foam, into the cavity (130).

## Revendications

1. Boîtier pour un enregistreur de données de vol largable d'un aéronef comportant :
un boîtier intérieur (110) comportant au moins un bord intérieur (112) ;
une région extérieure (120) déformable comportant au moins un bord extérieur (122) arrondi ;
le bord extérieur (122) de la région extérieure (120) présentant un plus grand rayon de courbure que le bord intérieur (112) du boîtier intérieur (110), et la région extérieure (120) présentant un matériau absorbant les chocs pour éviter un endommagement de l'aéronef en cas de largage de l'enregistreur de données de vol de l'aéronef, ce qui réduirait la sécurité aérienne,
**caractérisé en ce que** le boîtier présente un passage traversant central (140) afin de permettre une suspension à un point pour la fixation de l'enregistreur de données de vol à l'aéronef.

2. Boîtier selon la revendication 1, dans lequel la région extérieure (120) comprend :
un boîtier extérieur (124) comportant des bords arrondis (122) et des coins (123) ; et
une charge (130) conçue entre le boîtier intérieur (110) et le boîtier extérieur (124).

3. Boîtier selon l'une des revendications précédentes, dans lequel l'aéronef présente des moyens de fixation, en particulier un boulon de blocage à bille, pour la fixation du boîtier et le boîtier présente un anneau de retenue (142) dans le passage traversant (140) afin de permettre une mise en prise des moyens de fixation.

4. Boîtier selon l'une des revendications précédentes, dans lequel l'enregistreur de données de vol peut être placé dans une chambre de l'aéronef pouvant être fermée par un organe de recouvrement, et
dans lequel le boîtier intérieur (110) présente un ou plusieurs éléments de fixation (150) permettant de fixer l'organe de recouvrement au boîtier et la région extérieure (120) présente une ou plusieurs ouvertures (152) permettant d'accéder aux éléments de fixation (150).

5. Boîtier selon l'une des revendications précédentes, dans lequel le boîtier intérieur (110) présente un matériau suffisamment stable pour pouvoir lire des données de l'enregistreur de données de vol après une chute de l'aéronef et la région extérieure (120) présente au moins un coussin d'air et/ou une mousse et/ou une autre matière plastique.

6. Enregistreur de données de vol pour un aéronef, en particulier pour un avion, lequel enregistreur de données de vol peut être largué de l'aéronef au moyen d'une charge explosive et présente un boîtier selon l'une des revendications 1 à 5.

7. Procédé permettant la fabrication d'un boîtier
pour un enregistreur de données de vol largable d'un aéronef comportant les étapes suivantes :
fourniture (S110) d'un boîtier intérieur (110) comportant un bord intérieur (112) ; et
formation (S120) d'une région extérieure (120) comportant un bord extérieur (122) par l'application d'un matériau absorbant les chocs sur le boîtier intérieur (110), le bord extérieur (122) présentant un plus grand rayon de courbure que le bord intérieur (112) du boîtier intérieur (110) et le matériau absorbant les chocs étant conçu pour éviter un endommagement de l'aéronef en cas de largage de l'enregistreur de données de vol de l'aéronef, ce qui réduirait la sécurité aérienne,
**caractérisé en ce que** le boîtier présente un passage traversant central (140) afin de permettre une suspension à un point pour la fixation de l'enregistreur de données de vol à l'aéronef.

8. Procédé selon la revendication 7, dans lequel l'application (S120) du matériau absorbant les chocs comprend les étapes suivantes :
fourniture d'un boîtier extérieur (124) de telle sorte qu'une cavité (130) est créée entre le boîtier intérieur (110) et le boîtier extérieur (124) ; et
introduction (S120) d'une charge, en particulier d'une mousse, dans la cavité (130).
